# EUROPEAN PATENT SPECIFICATION

(11) **EP 1 722 517 B1**
(45) Date of publication and mention of the grant of the patent: **05.05.2010**
(21) Application number: 05076119.6
(22) Date of filing: 11.05.2005
(51) Int. Cl.: H04L 12/56

(54) **Communication system and method for flow control by port blocking**
Kommunikationssystem und Verfahren zur Kontrolle des Datenflusses durch Blockieren eines Ports
Système de communication et méthode pour contôler le flux de données par barrer des ports

(43) Date of publication of application: 15.11.2006
(73) Proprietor: Nokia Siemens Networks GmbH & Co. KG, 81541 München (DE)
(72) Inventor: Ribeiro dos Santos, José Miguel Ramalho, 1170-329 Lisboa (PT)

(56) References cited:
- EP-A- 1 109 362
- EP-A- 1 162 788
- EP-A- 1 206 087
- US-B1- 6 766 482

## Description

This invention relates to an improved method of operation of telecommunication systems comprising at least one network where data in appropriate form is sent between nodes via links. It has particular but not exclusive application to LAN's, WLAN's such as Ethernet

In some networks such as Ethernet, all the switches are transparent, i.e. when network data are passed the destination element of a frame doesn't realise that the frame has passed through a number of switches. If an Ethernet network contains loops there is more than one way from one network element to another network element. The transparency is lost since a frame may be duplicated, i.e. it has been sent down from multiple paths to the same destination, forking from a network element. This problem is further exacerbated by the fact that other switches don't know that a frame is already duplicated and may further duplicate it themselves, causing what is known as a broadcast storm.

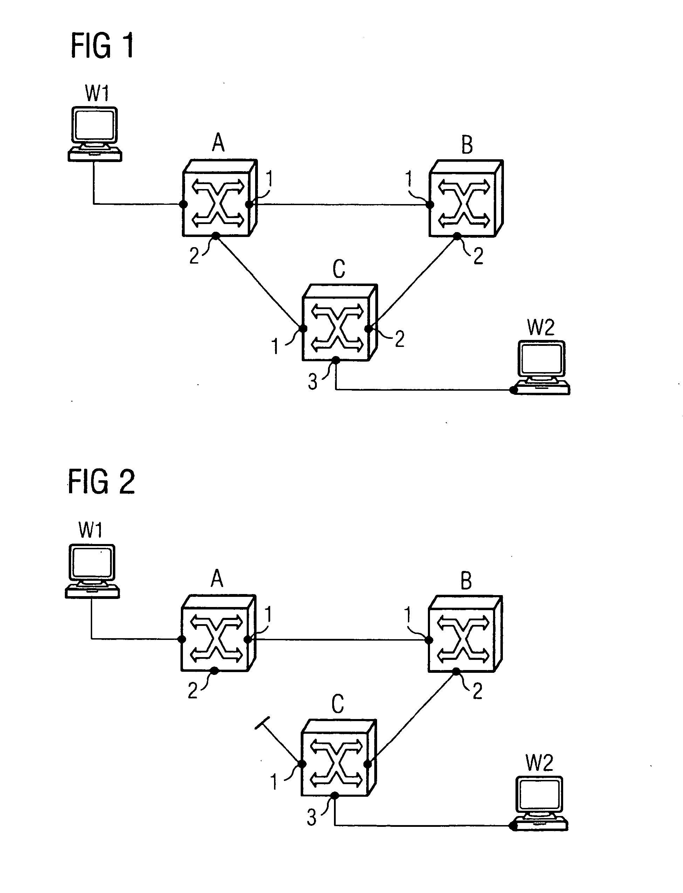

This is demonstrated in figure 1 where work station 1 sends a frame to workstation 2 and two frames would arrive since switch A would broadcast to all the port, except the one it received it from, since a still hasn't learned the location of the workstation 2. Two frames would then reach C which would then become confused since it would learn two possible locations for the origin of workstation 1 (it would only keep one of them thinking the location of 1 had changed). Worse than this, C would broadcast the frames received from port 2 to ports 1 and 3 and the frame it received from port 1 to ports 2 and 3. Two frames would reach workstation 2. Although this is obviously undesirable as it involves unnecessary duplication and thus unnecessary taking up of bandwidth it is usual to have more than one physical path from one network to another in order to have fault tolerance so that if a link is down data can still be passed between networks.

One known method of dealing with the problem so as to redeem the dilemma is to set up the system such that although there may be multiple physical links there is only one logical link through which data can reach one particular unit in a network to another. In spanning tree protocol (STP), the switches exchange messages between themselves in order to guarantee that only one path effectively exists between one node and another. Based on these messaged the node will then block all the traffic from specific ports in order to avoid loops. Such a system is shown in figure 2; by using STP switch A decided to block all traffic going through port 2. This effectively cuts the loop and guarantees for this network that only one path exists from one node another.

In Ethernet networks the same problem exists. Whereever a frame does not know where to deliver a frame because it does not know the address it has to broadcast it to all the ports except the one where it received it from.

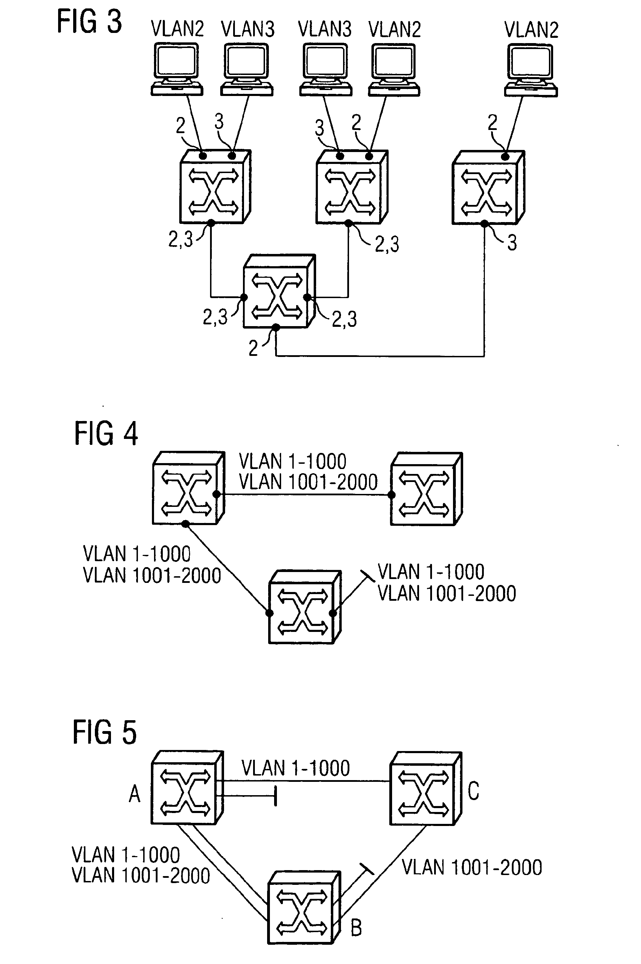

This problem has been partially solved in such systems using the concept of Virtual Local Area Networks. In such systems an internal table is kept containing the VLANs and the ports where these VLANS are assigned to. In such a way a network element is able to broadcast the frames belonging to a given VLAN just to the ports where that VLAN is assigned to. In order to support the concept of VLANs, the Ethernet frames had to be revised in order to include a VLAN tag which assists a receiving unit in knowing through which port(s) to send it further in and through which it should not. In this way whenever it receives a frame it knows which VLAN it belongs to by examining it and extracting the VLAN tag. This is shown in figure 3.

The numbers next to the ports represent the VLANs that are assigned to them. This means that only frames that belong to that VLAN are allowed to pass. All others are discarded. When a workstation belonging to VLAN 2 sends frames it marks them with VLAN tag 22. When a switch receives frames from VLAN 2 it broadcasts them to ports that have the VLAN 2 membership. A port may well have several VLAN memberships, in order to ensure connectivity between workstations in different switches but belonging to the same VLAN. Although this allows the network to be set up in an efficient manner with multiple but at the same time restrict paths (loops) it is inflexible when there is variability in link usage.

Another similar way of reducing the problem is the use of the Multiple Spanning Tree Protocol (MSTP) that tries to solve the problem of unbalanced Ethernet networks when using normal STP. This solution is described with reference to figures 4 and 5. These show a typical Ethernet network where STP and VLAN's are used. Suppose that the VLAN range 1 to 1000 belongs to customer A and that VLAN range 1001 - 2000 belongs to customer B. The STP would not allow traffic to go through one of the links so as to avoid loops; it would do so for all VLANs. One link would thus have no data traffic whatsoever. In order to avoid this, the efficiency is enhanced by Multiple Spanning Tree Instances which are entities that contain a VLAN range and a STO tree. This way it is possible for the MSTP to have different STP trees for different VLANs thus balancing network traffic.Tthis is illustrated in figure 4 b where there is one spanning tree for the VLAN range 1-1000 and a different spanning tree for VLAN range 1001-2000. This way the network is much more balanced than the one using STP since all the links are being used. In this way the usage of the links is divided between LANs, customers etc so one link doesn't get too overloaded but all links are blocked. In summary ,for SPT RSTP and MSTP are protocols which are used to avoid loops in the active network. These IEEE protocols are used and applied to physically meshed (wholly or partially) networks.

In case a network element in a network is overloaded there is provided a method in the European Patent Application EP 1109362 wherein a selective blocking request is sent from the network element to a control unit. According to the method the control unit will subsequently block all communications from the targeted network element to the requesting element.

European Patent Application EP 1206087 discloses a network device including two switches. The device is capable of switching data packets between network ports with the help of rate control messages.

The method of "protection switching" in a ring network is described in US Patent US 6766482. According to the method a ring manager is blocking one of its ports to prevent the creation of a ring in the network. In case of a failure in one of the links or in a network element the blocked link is unblocked to establish an alternative route for transmitting data.

A problem is that if a node blocks data on a link, the adjacent node still takes up processing power and link bandwidth by sending data to the blocked port.

It is an object of the invention to overcome this problem.

The invention comprises a method of controlling data flow between a first and a second node in a communication system having loops, where data is passed between said nodes via a link and proximal port on said second node is previously blocked. The method comprises said second node sending a request to said first node to block a proximal port so as to prevent said first node sending data to said second node via the link. It is characterised by said second node (2) previously determining if link bandwidth usage is above a threshold.

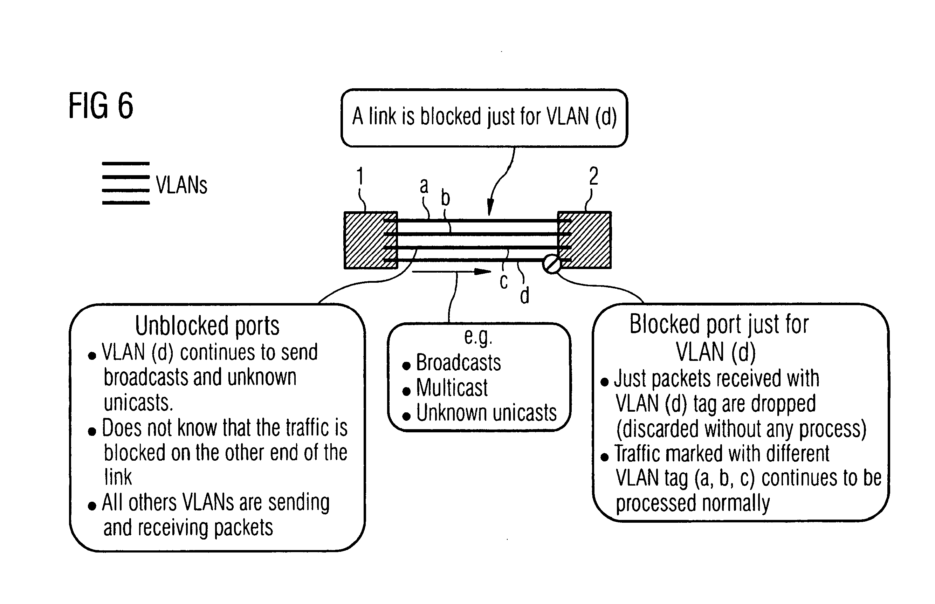

Figure 6 shows the prior art system showing two nodes 1 and 2 with links comprising sub-links: a, b, c and d. These sub-links in the example correspond to data pertaining to different VLANs. The system has decided to block link (d). However the sending node 1 continues to send data (e.g. broadcasts and unknown unicasts) and does not know that the traffic is blocked on the other end of the link. All other links are sending and receiving data packets. In other words all others VLANs are sending and receiving data packets. On node 2 the port is blocked just for just for VLAN (d), so that just packets received with green VLAN tag are dropped (discarded without any process). Traffic marked with different VLAN tag (a, b, c) continues to be processed normally.

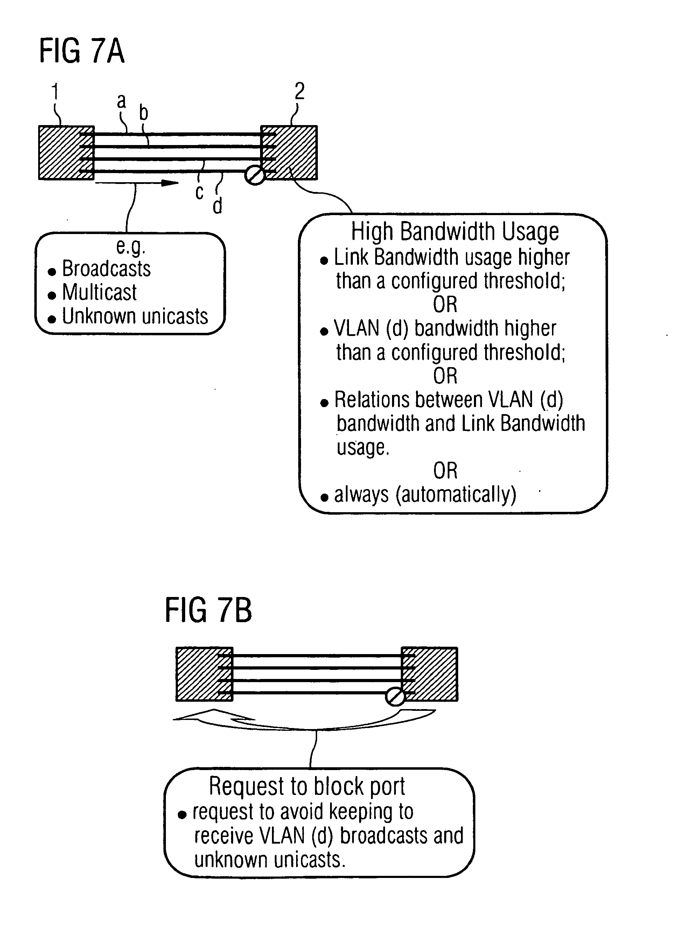

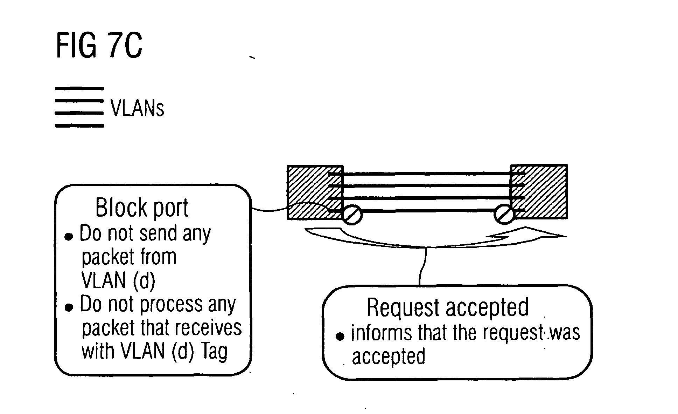

Figure 7 shows an example of the invention in contrast to the above. As a result of too high bandwidth usage, node 2 requests to node 1 to block the sending port on node 1 for VLAN (d). In 7 b the node 1 accepts the request and does not send any packets from VLAN (d) neither does it process any packets that it receives with a VLAN (d) tag.

A request is made when the link bandwidth usage is above a threshold.

In alternative embodiment the request may be made if the bandwidth for a sub-link (i.e. sub-link (e)) is above a certain threshold. The invention is not limited to these two examples and the request for both ports to be blocked may be made when there is a certain relationship between a certain sub-link (VLAN (e)) usage and total and link bandwidth usage, e.g. proportion. Or it may set up to be automatically so configured.

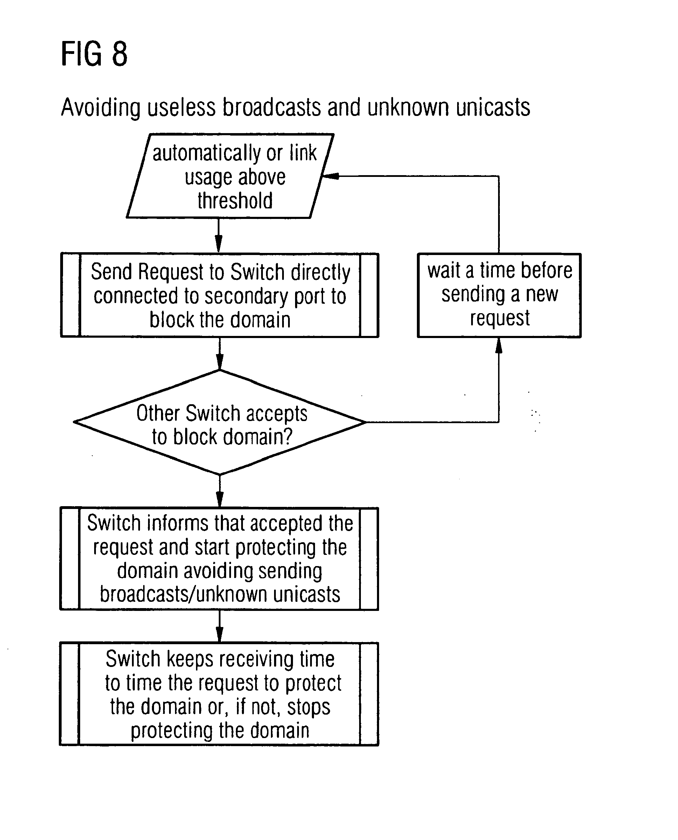

Figure 8 shows a flow diagram of the process in an embodiment of the general method.

## Claims

1. A method of controlling data flow between a first (1) and a second node (2) in a communication system having loops,
where data is passed between said nodes (1, 2) via a link (d) and a proximal port on said second node (2) is previously blocked, comprising said second node (2) sending a request to said first node (1) to block a proximal port so as to prevent said first node (1) sending data to said second node (2) via the link (d),
**characterised by**
said second node (2) previously determining if link bandwidth usage is above a threshold.

2. A method as claimed in claim 1 wherein said data which is effectively blocked is a broadcast and/or an unknown unicast.

3. A method as claimed in claim 1 or 2 wherein said data relates to a VLAN.

4. A method as claimed in any of the preceding claims wherein said link bandwidth is total link bandwidth.

5. A method as claimed in any of the preceding claims wherein said link bandwidth is sub-link bandwidth usage.

6. A method as claimed in claim 5 wherein said sub-link bandwidth is the bandwidth allocated to a particular LAN or other domain.

7. A communication system comprising means designed to perform all of the steps of any of the preceding claims.

## Patentansprüche

1. Verfahren zum Steuern eines Datenflusses zwischen einem ersten (1) und einem zweiten Knoten (2) in einem Kommunikationssystem, das Schleifen aufweist, wobei Daten über eine Strecke (d) zwischen dem Knoten (1, 2) weitergeleitet werden und ein proximaler Port auf dem zweiten Knoten (2) zuvor blockiert wird, umfassend: der zweite Knoten (2) sendet eine Anforderung zu dem ersten Knoten (1), einen proximalen Port zu blockieren, um so zu verhindern, dass der erste Knoten (1) Daten über die Strecke (d) zu dem zweiten Knoten (2) sendet,
**dadurch gekennzeichnet, dass**
der zweite Knoten (2) zuvor bestimmt, ob die Streckenbandbreitenauslastung über einer Schwelle liegt.

2. Verfahren nach Anspruch 1, wobei es sich bei den Daten, die effektiv blockiert werden, um ein Broadcast und/oder ein unbekanntes Unicast handelt.

3. Verfahren nach Anspruch 1 oder 2, wobei die Daten ein VLAN betreffen.

4. Verfahren nach einem der vorhergehenden Ansprüche, wobei die Streckenbandbreite Gesamtstreckenbandbreite ist.

5. Verfahren nach einem der vorhergehenden Ansprüche, wobei die Streckenbandbreite Substreckenbandbreitenauslastung ist.

6. Verfahren nach Anspruch 5, wobei die Substreckenbandbreite die einem bestimmten LAN oder einer anderen Domäne zugeteilte Bandbreite ist.

7. Kommunikationssystem mit Mitteln, die dafür ausgelegt sind, alle Schritte beliebiger der vorhergehenden Ansprüche auszuführen.

## Revendications

1. Procédé de contrôle d'un flux de données entre un premier
(1) et un second (2) noeud dans un système de communication comprenant des boucles, où les données sont transmises entre lesdits noeuds (1, 2) par le biais d'une liaison (d) et un port proximal sur ledit second noeud (2) est préalablement bloqué, dans lequel ledit second noeud
(2) envoie une demande audit premier noeud (1) pour bloquer un port proximal de manière à empêcher ledit premier noeud (1) d'envoyer des données audit second noeud (2) par le biais de la liaison (d),
**caractérisé en ce que**
ledit second noeud (2) détermine préalablement si l'utilisation de la bande passante de liaison dépasse un seuil.

2. Procédé selon la revendication 1, dans lequel lesdites données qui sont effectivement bloquées correspondent à une diffusion générale et/ou à une monodiffusion inconnue.

3. Procédé selon la revendication 1 ou 2, dans lequel lesdites données concernent un réseau local virtuel (VLAN).

4. Procédé selon l'une quelconque des revendications précédentes, dans lequel ladite bande passante de liaison est une bande passante de liaison totale.

5. Procédé selon l'une quelconque des revendications précédentes, dans lequel ladite bande passante de liaison correspond à une utilisation de bande passante de sous-liaison.

6. Procédé selon la revendication 5, dans lequel ladite bande passante de sous-liaison est la bande passante allouée à un réseau local (LAN) particulier ou à un autre domaine.

7. Système de communication comprenant un moyen conçu pour exécuter toutes les étapes de l'une quelconque des revendications précédentes.
